# EUROPEAN PATENT APPLICATION

(11) **EP 0 785 525 A2**
(43) Date of publication of application: **23.07.1997**
(21) Application number: 97100746.3
(22) Date of filing: 18.01.1997
(51) Int. Cl.: G06K 19/06, G06K 19/10

(54) **Tamper resistant coded card**

(30) Priority: 18.01.1996 JP 23411/96
(71) Applicant: Nagashio, Kichinosuke, Tokyo 150 (JP)
(72) Inventor: Nagashio, Kichinosuke, Tokyo 150 (JP)
(74) Representative: Merten, Fritz

(57) **Abstract**

A coded card on which are written, by way of a card writing means, prescribed digits and characters, expressed in a box figure code having four segments. Information on the location of card matching data is written into a matching data position recording area in an initial code area. When read by of a card reader, if the matching data is present in the places indicated in the position information in the matching data position recording area, the card is judged to be genuine. However, if the matching data is not present in the places indicated in the position information, it is judged to be of a fake card made by recombining portions of a used card with a new low value cards.

## Description

### BACKGROUND

This invention relates to measures to secure against improper use of coded cards. Specifically, this invention relates to procedures, materials, figures, and relational data formulated to secure the information on a coded card.

Coded cards, common throughout the world, are most commonly used as credit cards, cash cards, identification cards, and various types of prepaid cards such as phone cards. Data are encoded on these cards by either printing or magnetic recording means. Credit cards such as VISA®, cash cards issued by financial institutions, and various types of prepaid cards such as telephone cards are almost exclusively magnetic recording cards.

In a magnetic recording card, for example a credit card, personal information such as the code number of the card issuer and the user's personal number, name, and title, as well as information such as the effective term of the card and its card type, is converted to seven-bit-per-character signals, which include a parity check. This information of up to 79 characters is magnetically recorded on a 7.3-mm-wide magnetic stripe on the back or front of the card.

The size of the magnetic stripe naturally imposes a limitation on security measures, including encoding, because all the card information, including the parity signal for correcting bit errors, must be recorded on a magnetic stripe that can record no more than about 79 characters. Consequently, it is not a technically difficult job to decipher or forge the data on a magnetic card. As a result, the number of cases of magnetic card misuse appears to be steadily growing. However, assessment of the actual extent of card misuse is difficult because: (1) card misuse and reflect negatively on the management of the card company itself, and (2) because methods of misuse and accurate statistics are not generally made public. The only readily available figure on this problem is the approximately $200 million (about 20 billion yen) loss attributed to credit card misuse in the United States during 1985. Losses in more recent years are uncertain.

Bank and other cash cards are not in as wide use as credit cards, which are distributed internationally. Consequently, it might be expected that cash card losses would be less, but the total amount of cash card losses may actually be greater, because the amount lost per cash card misuse is much greater. In the case of bank cash cards, a dozen years ago there were practices in place that today would be unbelievable from the standpoint of financial institution security, such as magnetically recording code numbers in non-encrypted form on the card's magnetic stripe. Consequently, card crimes occurred in which other people's cards were easily forged and millions were improperly withdrawn. In response, cash cards have used a "zero verification system" in which no personal identification number is recorded on the card. Rather, security is integral with the bank's host computer which compares the personal identification number input by the customer with the one in its records. However, this method of protection by personal identification number is still not completely secure. People tend to choose easy-to-remember, consequently easy-to-guess, numbers such as their date of birth, the birthday of a family member, their telephone number, or their street address.

Telephone cards and other prepaid cards, being magnetic recording cards, are easy to alter. An ironic example of such forgery is illustrated in the case where a public telephone that accepts telephone cards, installed in response to customer complaints about not receiving proper change when depositing 100-yen pieces in coin-operated phones, was stolen and transformed into a telephone card counterfeiting machine. Its circuitry was modified so that every time a telephone card was inserted into it, the number of use times recorded magnetically on the card, was incremented rather than decremented. This had the effect of "recharging" a run-down telephone card.

Subsequent measures against such misuse include: prohibiting high-value cards entitling one to use a phone, for example, more than 105 times; and ensuring that when a caller is finished using a card-accepting phone or when the power to the phone is disconnected, a security function disables the use-counting circuitry. None the less, as long as the telephone card uses a simple mechanism for magnetically recording the number of times it has been used, such hardware and software protections, which are said to cost several thousand dollars per phone, cannot guarantee that the information on the card won't be deciphered and stolen.

Seen this way, the development of magnetic card security has been a battle of wits between forgery organizations constantly developing methods to bypass security and card companies trying to put a stop to such theft. Counterfeiters have now learned to get by the optical "dove hologram" technology introduced on VISA® cards, along with encoding of the data that distinguishes genuine cards from forgeries. Such counterfeiters have brought forth an era of fourth-generation fake cards.

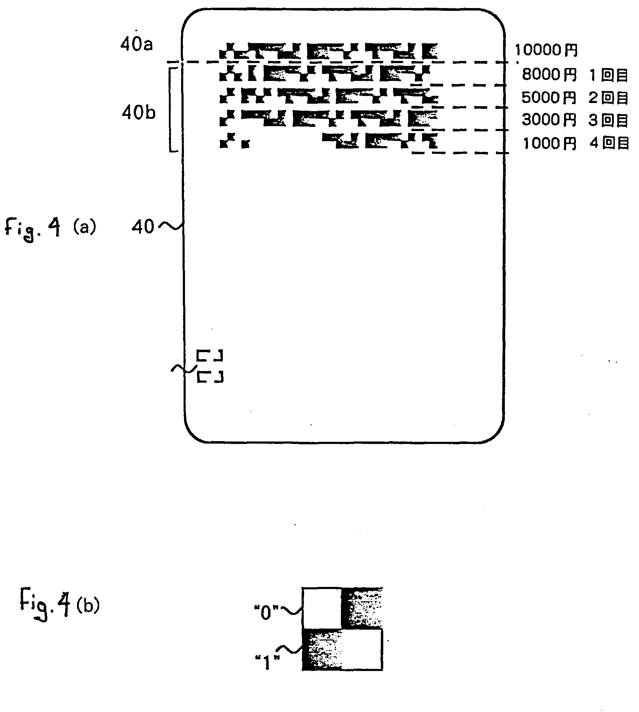

The development of magnetic cards has proceeded thus far despite fundamental misgivings about security, while counterfeiting organizations have become increasingly more sophisticated in electronics. In place of magnetic cards, coded cards have recently been developed that use a two-dimensional figure code made with printing technology rather than an easily forged magnetic recording system. An example of such a two-dimensional code card is shown in Fig. 4(a).

The information printed in an initial code area 40a at the top level of a two-dimensional code card 40 shown in Fig. 4(a) is written with the four-segment two-dimensional figure code, called a Calra code, shown in Fig. 4(b). In Calra code, the four segments into which a square is partitioned constitute the basic code unit, a black-filled segment representing "1" and an unmarked white segment representing "0", with various information expressed by combinations of 1 and 0. The printing can be accomplished with an "invisible ink". Also, the Calra code system has the advantages of storing a greater quantity of information than, a bar-code, and of allowing direct computer processing. Because it is printed with a special figure code, it cannot be duplicated simply the way that magnetically encoded data on a magnetic card is duplicated with a magnetic head.

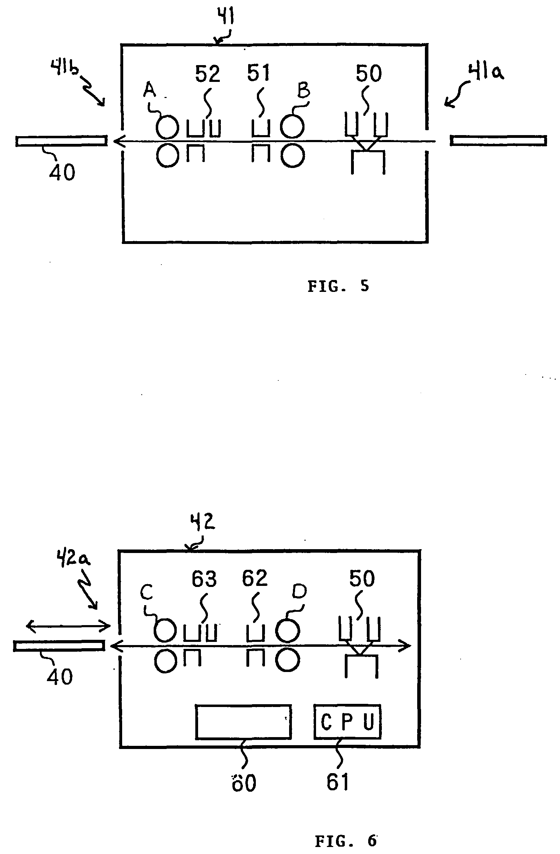

Referring to Fig. 5, when the fee is inserted into a conventional card issuing machine 41 from a customer side 41a, a card such as the one of Fig. 4 is issued at a value corresponding to the amount inserted. To accomplish this, the issuing machine first reads a key code on the transparent ink printing portion of the blank prepaid card to be issued by means of an optical reading sensor 50. The card then passes through a roller B. As card 40 is fed from roller B, a writing head 51 writes Calra code numerical information, etc. onto initial code area 40a while scanning back and forth at the prescribed speed in an orientation perpendicular to the direction in which the card moves. For example, if a 10,000-yen note is inserted and the 10,000-yen button is pressed, numerical information for 10,000 yen is written onto initial code area 40a of prepaid card 40 as shown in Fig. 4. Once the writing is complete, the written-in content of the black and white segments of the Calra code is confirmed by an optical reading head 52. If there are no errors, card 40 is sent to an issue side 41b by a roller A to be delivered to the customer.

Fig. 6 is a simplified block diagram of a conventional card reader 42. For use, card 40, Fig. 5, is inserted into card reader 42 through an access 42a and the monetary amount of the desired transaction is entered by means of a fee input unit 60. A central processing unit, CPU 61 reads the remaining monetary amount on initial code area 40a of inserted prepaid card 40 by means of a reading head 63. After confining that the remaining amount is sufficient, it issues a command to release the corresponding good (game ticket, item of merchandise, telephone call, photocopy, etc.). Once the transaction is complete a writing head 62 writes the new encoded balance (for example, 8,000 yen) on the next line of a balance code area 40b of prepaid card 40 and returns it to access 42a.

One drawback with the above conventional system is that it is vulnerable to counterfeiting. In one scheme, exhausted high value cards are regenerated by taking advantage of a blind spot in the figure code printing area. Referring again to fig.4, initially initial code area 40a is printed, for example, with high monetary value, for example 10,000 yen. Each time the card is used, the card reader reprints a new value for the card in balance code area 40b just below the previous code amount. When the card has been used repeatedly, the value remaining becomes small, for example, 1,000 yen. At this point the counterfeiter purchases a relatively low value. Both cards are then cut off just below initial code area 40a. A hybrid card is produced when the blank balance code area, the white portion, of the unused low value card is attached to the initial code portion of the high value card. Consequently, a card reader recognizes the hybrid card as having the original high monetary value.

In view of the above problems in coded cards it is desirable to provide a two-dimensional figure code card that utilizes a printed code yet overcomes counterfeiting schemes such as those described above.

### OBJECTS AND SUMMARY OF THE INVENTION

It is an object of the present invention to overcome the problems of the prior art. In this regard, it is one object of the present invention to provide a coded card which utilizes a means of coding other than a magnetic strip.

Another object of the present invention is to provide a printable code that is easily readable directly into a digital system.

It is yet another object of the present invention to provide a printable code that is inherently able to be systematically varied such that encoding the same information appears differently on the face.

It is yet another object of the present invention to provide a coding system on a coded card that accounts for each portion of the card to defeat counterfeiting schemes that attempt to alter card values by recombining card portions.

Consequently, one feature of this invention utilizes matching data using a figure code, written in a random position, such as on the bottom of the card. Matching data written-in information is also printed in a prescribed location, and the two are compared when the card is used, thereby recognizing any forged cards.

Another feature of the present invention utilizes a symmetrical two dimensional box figured code that can be rotated such that a different result is obtained from different increments of rotation. A coded number can then be placed randomly to prescribe the increments of rotation that must be made on the box figured code in order to read it correctly.

One embodiment for realizing the purpose of the invention relating to this application lies in a figure code card that is characterized in that a figure code card in which prescribed digits and characters, etc. expressed by figure codes having four segments are written in by a card writing-in means. The card has card matching data written in a random position on the card as well as, written in a prescribed area of the initial code area, write-in position information for the card matching data. This makes it possible to recognize and reject pasted-together forged cards by comparing the card matching data and its write-in position information.

Another embodiment for realizing the purpose of the invention relating to this application lies in a figure code card that is characterized the card matching data being a figure that expresses one basic unit of a box figure code. This arrangement enables recognition because it suffices to read a single basic unit of the box figure code as matching data.

Another embodiment for realizing the purpose of the invention relating to this application is in a figure code card that is characterized in the write-in position of the card matching data being in multiple positions at the bottom of the card. This arrangement makes it possible to read and compare the matching data written in the prescribed positions at the bottom of the card, based on the position information written at the top of the card.

Briefly stated the present invention provides a figure code card that can prevent forgery made by pasting together box figure code cards. A figure code card on which is written, by a card writing means, prescribed digits, characters, etc. expressed in a two dimensional box figure code having four segments. Information on where card matching data is located is written into a matching data position recording area in the initial code area. When read by a card reader, if the matching data is present in the places indicated in the position information part of the matching data position recording area, the card is judged to be genuine. If the matching data is not present in the places indicated in the position information, it is clearly judged to be a fake card made by combining the top and bottom of different cards, and its use is prohibited.

The above, and other objects, features and advantages of the present invention will become apparent from the following description read in conjunction with the accompanying drawings, in which like reference numerals designate the same elements.

### BRIEF DESCRIPTION OF THE DRAWINGS

Fig. 1 is a drawing that shows the figure code card of a mode of one embodiment of this invention.

Fig. 2a is an explanatory diagram for two dimensional code of the type that can be used to encode the matching data shown in Fig. 1.

Fig. 2b is an explanatory diagram of an element of two dimensional code of the type that can be used to encode the matching data shown in Fig. 1.

Fig. 2c is an explanatory diagram for two dimensional code for the 16 digit binary number 1111 1111 1111 1111 of the type that can be used to encode the matching data shown in Fig. 1.

Fig. 3a is a simplified block diagram of a card issuing machine for issuing cards of the type shown in Fig. 1.

Fig. 3b is a simplified block diagram of a reader for the card shown in Fig. 1.

Fig. 4a is a plan view of a conventional two-dimensional code card of the prior art that utilizes a Calra code for encoding information.

Fig. 4a is an example of a unit of Calra code used in encoding information on the coded card of Fig. 4a.

Fig. 5 is a simplified block diagram of a conventional card issuing machine of the prior art.

Fig. 6 is a simplified block diagram of a conventional card reader of the prior art.

### DETAILED DESCRIPTION OF THE PREFERRED EMBODIMENT(S)

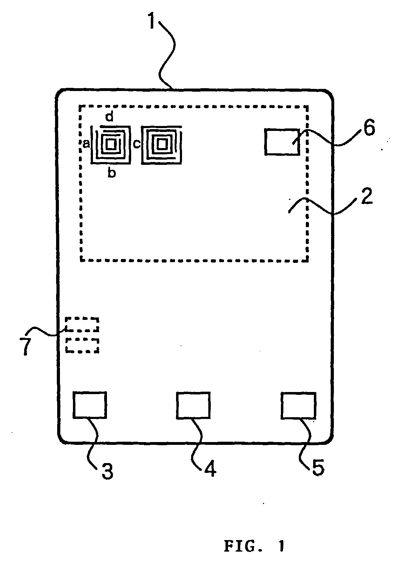

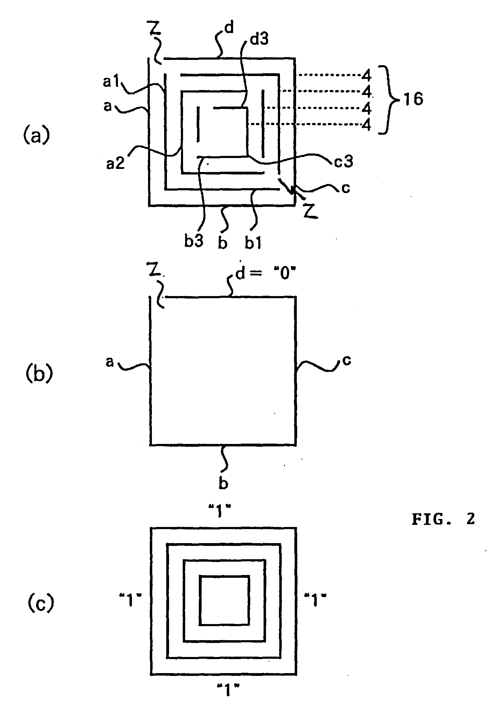

Referring first to Fig. 1, a figure code card 1, as an example of one embodiment of the present invention, includes card matching data 3, 4, and 5. Card matching data 3, 4, and 5 are each written in a random position on card 1. For example, here card matching data 3 is in a lower left position, card matching data 4 is in a lower middle position, and card matching data 5 is in a lower right position. Other positions can be chosen or the CPU can generate and place codes at random positions. This matching data is encoded as a two dimensional figure, for example, as shown in Fig. 2(c). The code may be a standard code such as the 16 digit binary number consisting of all ones of Fig. 2c or may be a randomly generated code.

Further shown in Fig. 1, the location of each card matching data 3, 4, and 5 is encoded as position information by X,Y coordinates, corresponding to the randomly chosen position, in a card matching data position recording area 6. Card matching data position recording area 6 may be printed, as shown here, as the last figure of the initial code line (uppermost line) of a main information write-in area 2. When figure code card 1 is issued, the first monetary value is written on the top line of the initial code area in the uppermost level of main information write-in area 2. Thereafter, as in the conventional example, the first through the n-th remaining amounts are written in each successive line thereunder every time an update is made that results in a new balance.

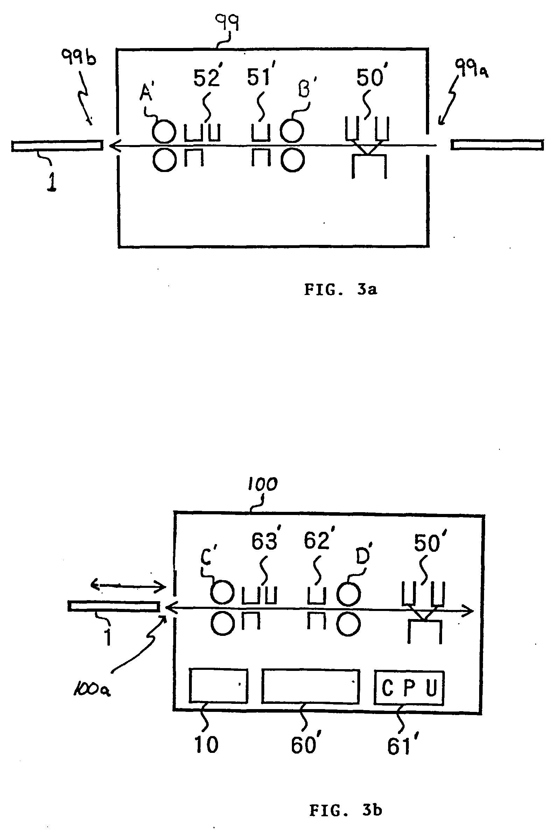

Referring to Fig. 3b, a card reader 100, an example of an embodiment of the present invention, uses figure code card 1 of Fig. 1. Card reader 100 differs from conventional card reader 42 shown in Fig. 6 in that it has a correlation detector 10 for matching data 3-5 responsively to information in card matching data position recording area 6. Additionally, an optical reading sensor 50', a writing head 62', and a reading head 63' are controlled by a CPU 61 to utilize the box figure code of Fig. 2 rendered with invisible ink.

Use of the box figure code system provides an improvement to printing and recognition problems that arise with the figure code of the Calra system. shown in the prior art example. Such improvements become especially advantageous when the figures are printed smaller as the quantity of data increases.

As shown in Fig. 2(a), the box figure code is a figure code in which a single basic unit consists of four concentric quadrilaterals (called boxes) of different areas whose four side straight lines are its four segments. In the diagram, the outermost box consists of sides a, b, c, d, the second box consists of sides a1, b1, c1, d1, the third box consists of sides a2, b2, c2, d2, and the fourth and innermost box consists of sides a3, b3, c3, d3. If each segment is made to correspond to one bit of computer code, then one quadrilateral (box) can express 4 bits, and four quadrilaterals together can express 16 bits in a single basic code figure. In this way one basic unit can encode one of 2¹⁶, or 65,536, different expressions.

Fig. 2(b) shows the outermost box in an example. If the convention is adopted that in a segment straight line "0" is represented if there is a cutout part Z and that "1" is represented if there is no cutout part Z, then in the box shown in Fig. 2(b), straight line a="1", straight line b="1", and straight line c="1". Thus the binary code "1110" can be expressed by the single box in Fig. 2(b), and we have a code where numerical data, character data, and symbol data, etc. is expressed by binary and hexadecimal expressions using these box codes. The position of the cutout part of a side straight line may be at the left end or the right end or in the middle.

Fig. 2© is an example of matching data 3, 4, 5 used in this embodiment. n this example, all four segments of the four boxes encode "1", resulting in the 16 digit binary number 1111 1111 1111 1111. In example used for this illustration the write-in position of matching data 3-5, is: a three-point display of left end 3, middle 4, right end 5 at the bottom of card 1; a two-point display of combinations such as matching data present in 3 and 5, 3 and 4, or 4 and 5; or a one-point display of matching data present in only position 3 or 4 or 5.

For the series of operations of issuing and using a card, when paper currency is inserted into the system issuing machine shown in Fig. 3A as is conventionally done, the issuing machine reads a rotation key code 7, printed in transparent ink. Then monetary amount information, etc. (for example, 10,000 yen) according to the box figure code is written with writing head 51' with transparent ink in the initial code area in the top-stage first line of main information write-in area of card 1. Coordinate data indicating the write-in position (such as the card's lower left 3, middle 4, and lower right 5) of card matching data 3-5 for detecting fake cards is then written with transparent ink in card matching data position recording area 6 provided at the end of the initial code area.

In accordance with the information in card matching data position recording area 6, card matching data 3-5 is written with transparent ink by writing head 51' at the appropriate positions, here, the bottom of the card. Box figure code card 1 on which the writing-in has ended is sent out to the customer after its written-in content is confirmed.

To use, issued card 1 is inserted into the card reader shown in Fig. 3b and the monetary amount is entered by fee input unit 60'. CPU 61' on the card reader side, besides doing the usual decoding processing such as confirmation of the amount remaining on the card and the key code, performs matching and judgment of the card by card matching data 3-5 via correlation detector 10.

In matching, reading head 63' uses ultraviolet light to read the transparent ink and verifies whether card matching data 3-5 is written in the correct positions (such as lower left 3, middle 4, lower right 5) indicated by the position information in card matching position recording area 6. If card matching data 3-5 is written in the positions indicated by position information 6, card 1 is judged to be a genuine card, a user directed commercial action is executed, the n-th rewriting is done by which the remaining balance is written on the next line, and the card is returned.

On the other hand, if card matching data 3-5 is not written correctly in the position(s) indicated by position information 6 of the initial code area, the judgment is made that it is a fake card in which the initial code area part in which a large amount (for example, 10,000 yen) is clearly written has been patched together with the blank space of another, low-amount card, and the reading operation is suspended, a warning is displayed, and, optionally, the card is confiscated. The comparison data, such as write-in positions and number of instances of writing-in of matching data 3-5 as well as the size of the basic code used as matching data, is changed by the system with appropriate timing so as to prevent decryption.

The explanation thus far has been given for the example of a prepaid card using a box figure code, but of course this may also be applied to other kinds of cards, such as credit cards and cash cards.

As explained above, with this invention, card matching data using a box figure code as its basic code is written in random positions, such as on the bottom of the card. Information about its write-in position is written into a prescribed area of the initial code area. When the card is read, the write-in position information concerning the card matching data is obtained and compared with the actual positions of the card matching data. If the card matching data is not present in the indicated positions the card is judged to be a fake and its use can be refused. Thus a system with such figure code cards has a much simpler structure than today's less than completely secure magnetic card systems. As a result this new system can accurately recognize pasted-together fake cards that make use of the initial code area, for example, and can prevent misuse. Also, because all of the data is printed in transparent ink, including matching data and key codes as well as the main information, this system provides a level of greater security than a two-dimensional code card printed in black and white.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A tamper resistant coded card, comprising:
said coded card having a face and a back;
encoded information printed on at least one of said face and said back;
said encoded information printed with ink, said ink being at least one selected from the group consisting of a visible ink and an invisible ink;
at least a part of said encoded information including a two dimensional digital figure code;
said encoded information including an initial code, a rotation code, and at least one card matching code;
said two dimensional digital figure code having an overall shape, said overall shape having a rotation point and a polylateral symmetry;
said rotation code encoding a rotation data dictating a rotation increment for rotating said two dimensional digital figure code;
each said at least one card matching code printed at a known random location on one of said face and said back; and
at least one of said known random locations encoded with other information in said initial code.

2. The tamper resistant coded card of claim 1 wherein all said known random locations are encoded in said initial code.

3. The tamper resistant coded card of claim 1 wherein:
a plurality of said card matching codes are identified sequentially with a serially incremented encoded identification number;
a first of a plurality of known random locations corresponding to a first of said plurality of said card matching codes is encoded in said initial code;
the total number of said known random locations corresponding to a total number of said plurality of said card matching codes is encoded in said initial code; and
each subsequent said known random location is encoded by a previous said known random location.

4. The tamper resistant coded card of claim 1, wherein:
said overall shape having quadrilateral symmetry.

5. The tamper resistant coded card of claim 2, wherein:
said overall shape having quadrilateral symmetry.

6. The tamper resistant coded card of claim 3, wherein:
said overall shape having quadrilateral symmetry.

7. A tamper resistant coded card, comprising:
an initial code;
at least one card matching code;
said initial code and said at least one card matching code being composed of at least one two dimensional digital figure code, each said at least one two dimensional digital figure code having an overall shape with a rotation point and polylateral symmetry;
each said at least one card matching code located on said card at a location; and
each said location determinable from said initial code.

8. The tamper resistant coded card of claim 7, wherein:
said polylateral symmetry is quadrilateral symmetry.

9. The tamper resistant coded card of claim 7, further comprising a rotation code, said rotation code functioning to specify an increment of rotation that each said two dimensional digital figure code is to be rotated prior to reading.

10. The tamper resistant coded card of claim 8, further comprising a rotation code, said rotation code functioning to specify an increment of rotation that each said two dimensional digital figure code is to be rotated prior to reading.

11. A method of encoding a tamper resistance on a coded card, comprising the steps of:
providing at least one location matching data;
randomly locating each said at least one location data on a coded card; and
at least one of encoding a location corresponding to each said at least one location matching data and encoding a contents corresponding each said at least one location matching data.

12. The method of encoding a tamper resistance on a coded card of claim 11, further comprising the step of printing at least one of each said at least one location matching data, said location, and said contents on said coded card using an invisible ink.

13. A method of using a tamper resistant coded card generated by the method of claim 12, comprising the steps of:
illuminating said card with an invisible ink illuminator;
reading said at least one of each said at least one location matching data, said location, and said contents;
verifying whether each said location and each said contents corresponds correctly to said at least one location matching data; and
one of accepting said coded card as authentic and rejecting said card as counterfeit, said one of accepting and rejecting being responsive to a result of said step of verifying.
